# EUROPEAN PATENT APPLICATION

(11) **EP 4 733 228 A1**
(43) Date of publication of application: **29.04.2026**
(21) Application number: 25210401.3
(22) Date of filing: 22.10.2025
(51) Int. Cl.: B65G 13/08, B65G 21/20, B65G 47/66

(54) **ROLLER TRANSFER PLATE**

(30) Priority: 22.10.2024 US 202463710365 P; 21.10.2025 US 202519363836
(71) Applicant: Illinois Tool Works Inc., Glenview IL 60025 (US)
(72) Inventor: ABRAMS, Benjamin G., Glenview, 60025 (US); NUNN, J. Mark, Glenview, 60025 (US)
(74) Representative: HGF

(57) **Abstract**

A roller transfer plate for moving product through a conveyor transition includes a plate and a center spindle extending through the plate. A plurality of axles are arranged radially in the plate relative to the center spindle and a plurality of balls or rollers are positioned on the axles and arranged concentrically.

## Description

### CROSS REFERENCE TO RELATED APPLICATION

This application claims the benefit of U.S. Provisional Application, Serial No. 63/710,365, filed on 22 October 2024. The co-pending provisional application is hereby incorporated by reference herein in its entirety and is made a part hereof, including but not limited to those portions which specifically appear hereinafter.

### BACKGROUND OF THE INVENTION

### FIELD OF THE INVENTION

This invention relates generally to a conveyor transfer plate for smoothly transferring product around corners and/or through arcs.

### DESCRIPTION OF PRIOR ART

Conventional conveying equipment may include conveyor belts, link belts, roller belts, and similar. It is often desirable to connect adjacent conveyor sets with transition plates. Such transition plates are often simply flat smooth plates that enable movement of product from one conveyor set to another.

One limitation of existing transfer plates is that product is typically guided through them by backpressure of trailing product and/or siderails as the transfer plates do not include any active elements to provide such guidance. Such arrangements may result in unnecessary bottlenecks or slowdowns in the conveying operation as products bunch or snag through transitions. As such, a need exists for a transfer plate that urges product into a desired direction, such as around corners, through transitions, and/or between conveyor segments.

### SUMMARY OF THE INVENTION

The invention generally relates to a transfer plate that conserves the momentum of the products passing through the transition such as around a corner and/or through an arc.

The subject invention preferably includes a plate and a center spindle extending through the plate. The center spindle preferably supports a traction wheel to move the product across the transfer plate. The traction wheel preferably forms an inside guide for the product. An outside guide may additionally be placed for the product that can be powered, such as a belt, or non-powered, such as a rail. A plurality of axles are preferably arranged radially within the plate relative to the center spindle with a plurality of balls or rollers positioned on those axles. The plurality of balls or rollers are preferably arranged concentrically.

Other objects and advantages will be apparent to those skilled in the art from the following detailed description taken in conjunction with the appended claims and drawings.

### BRIEF DESCRIPTION OF THE DRAWINGS

FIG. 1 shows a top view of transfer plate assembly for transferring product between conveyors according to one embodiment.
FIG. 2 shows a solid model top view of the roller transfer plate assembly according to one embodiment.
FIG. 3 shows a top view of transfer plate assembly according to one embodiment.
FIG. 4 shows a bottom view of a roller transfer plate assembly according to one embodiment.
FIG. 5 shows a cross-sectional view of the roller transfer plate assembly according to one embodiment.

### DETAILED DESCRIPTION OF THE INVENTION

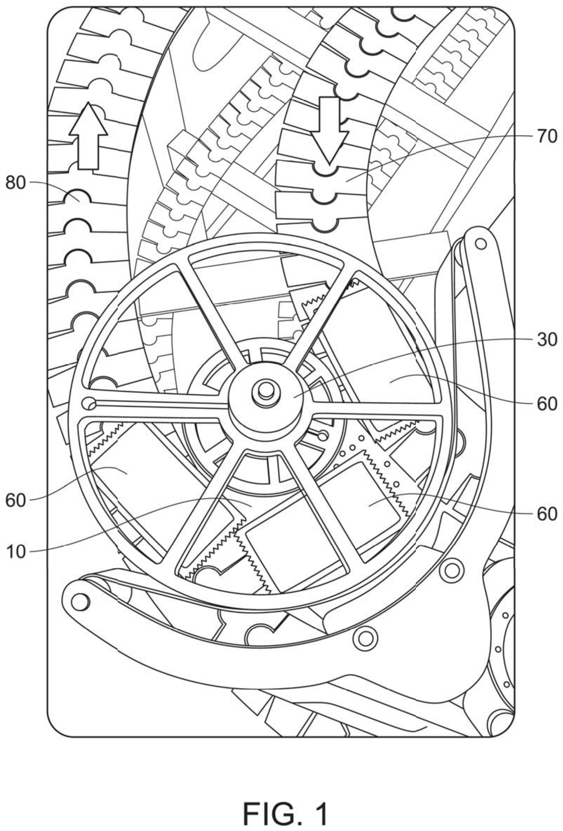

The present invention provides a transfer plate 10 for moving product through a conveyor transition. Figs. 1-5 show various preferred embodiments of the transfer plate 10 and the associated conveyor system.

Fig. 1 shows a preferred arrangement of the subject conveyor system including a transfer plate 10 and center spindle 30 to enable product 60 to negotiate transitions between an infeed conveyor 70 and onto a subsequent conveyor 80, and/or a reverse direction, across the transfer plate 10. Fig. 1 shows the transfer plate 10 for transferring product 60 between conveyors 70, 80 through an arc or corner, such as a 180 degree arc as shown. Product 60 is moved by the infeed conveyor 70 onto the transfer plate 10. The transfer plate 10 bridges the distance to outfeed conveyor 80 and transfers product 60 in an arc motion. Product 60 is transferred onto outfeed conveyor 80 and the transfer is complete.

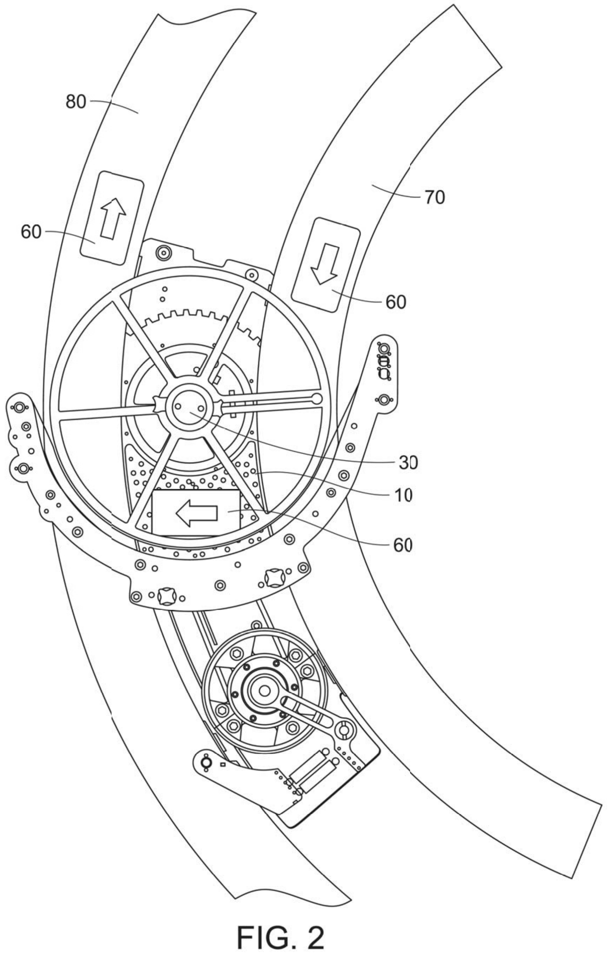

Fig. 2 shows a top view of the transfer plate 10 according to one embodiment. Product 60 is transferred from conveyor 70 across the transfer plate 10 and onto conveyor 80. According to one embodiment the center spindle may drive a belt 35. The belt 35 is preferably positioned generally perpendicular to the roller transfer plate 10 and, in operation, provides a moving sidewall for the conveyor system to urge products 60 through the conveyors 70, 80 and across the transfer plate 10.

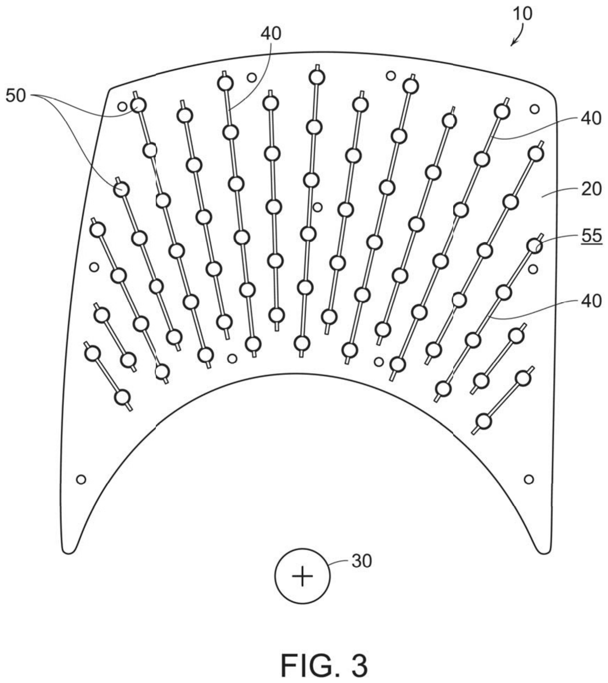

Fig. 3 shows a top view of the transfer plate 10 in a preferred assembly. A support plate 20 is provided in a desired shape to accommodate a desired transition. The support plate 20 may be constructed of a rigid material capable of accommodating the assembly described and supporting product 60 through a transition. The support plate 20 may be constructed of plastic, steel, or similar material having such desired properties.

The support plate 20 preferably includes a plurality of axles 40 arranged in a radial pattern around the support plate 20 that are preferably aligned with the center spindle 30 of the installed system. In a desired assembly, a center spindle 30 preferably extends through the support plate 20. A plurality of axles 40 are arranged radially around the support plate 20 relative to the center spindle 30. The axles 40 are preferably configured as relatively small gauge wires and constructed of steel or a similar material.

A plurality of balls or rollers 50 are positioned along the axles 40 and radiate outwardly from that center spindle alignment. The plurality of balls or rollers 50 are preferably positioned within an arrangement of cavities, cutout or through holes 55 in the support plate 20 and surround the respective axle 40, according to one embodiment. The plurality of balls or rollers 50 are preferably positioned on and along the plurality of axles 40 in a concentric arrangement. Moreover, each axle 40 preferably includes balls or rollers 50 that are radially offset relative to the balls or rollers in each adjacent axle.

The balls or rollers 50 may be metallic or plastic beads or bearings having a through hole through which a respective axle 40 of the plurality of axles 40 are located. Each ball or roller 50 preferably sits in the cavity, cutout or through hole 55 formed in plate 20 to maintain relative position within plate 20.

In a preferred embodiment, each axle 40 is positioned between a top surface and a bottom surface of the support plate 20. Further, the plurality of balls or rollers 50 preferably extend across only the top surface of the support plate 20 and are inset from the bottom surface. As such the balls or rollers 50 protrude from only a single side of the support plate 20.

In operation, the product 60 moving along a conveyor 70, 80 will transition across the transfer plate 10 and the arrangement of the balls or rollers 50 will preferably direct the product 60 through the arc transition. The arc is proportional to the product 60 location relative to the center spindle 30.

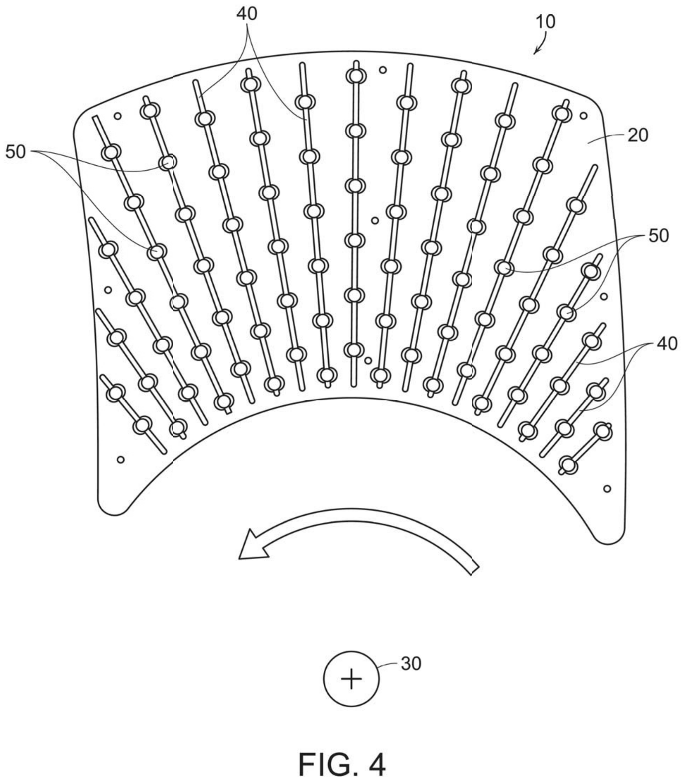

Fig. 4 shows a bottom view of a roller transfer plate assembly 10 according to one embodiment. The bottom view illustrates one preferred arrangement of the axles 40 in a radial pattern relative to the center spindle 30. The balls or rollers 50 are aligned with the desired direction of the conveyed product 60 according to one embodiment.

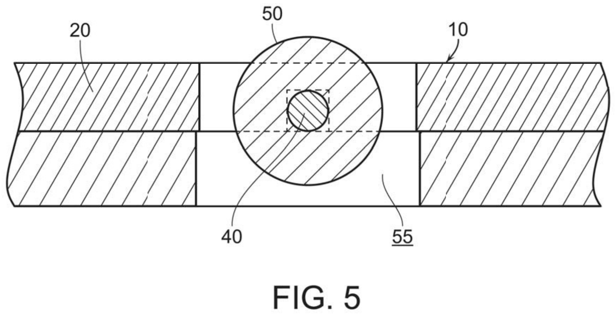

Fig. 5 shows a cross-sectional view of the roller transfer plate assembly 10 according to one embodiment. A top engagement surface of the ball or roller 50 must extend above the transfer plate 20 surface. Each respective ball or roller 50 is preferably located along axle 40 and a cavity 55 in transfer plate 20. The gaps parallel to the axle 40 on both sides of the ball or roller 50 in the transfer plate 20 are preferably used for cleaning the assembly, according to one embodiment.

The invention illustratively disclosed herein suitably may be practiced in the absence of any element, part, step, component, or ingredient which is not specifically disclosed herein.

While in the foregoing detailed description this invention has been described in relation to certain preferred embodiments thereof, and many details have been set forth for purposes of illustration, it will be apparent to those skilled in the art that the invention is susceptible to additional embodiments and that certain of the details described herein can be varied considerably without departing from the basic principles of the invention.

Certain embodiments of the invention are described in the following clauses:
Clause 1. A roller transfer plate for moving product through a conveyor transition, the roller transfer plate comprising:
   a support plate;
   a center spindle;
   a plurality of axles arranged radially in the plate relative to the center spindle;
   a plurality of balls or rollers positioned on the plurality of axles, the plurality of balls or rollers arranged in concentric arcs relative to the center spindle.
Clause 2. The roller transfer plate of Clause 1 wherein the plurality of balls or rollers are positioned so that an outer diameter of each ball or roller is raised above the surface of the support plate.
Clause 3. The roller transfer plate of Clause 1 wherein locations of the ball or roller locations are arranged in an arc to cause conveyed product to follow the arc.
Clause 4. The roller transfer plate of Clause 1 wherein the support plate includes a plurality of cavities, each cavity of the plurality of cavities accommodating a ball or roller.
Clause 5. The roller transfer plate of Clause 1 further comprising an inlet conveyor connected to a first portion of the support plate and an outlet conveyor connected to a second portion of the support plate.
Clause 6. The roller transfer plate of Clause 5 wherein the first portion is positioned 180 degrees opposite the second portion.
Clause 7. The roller transfer plate of Clause 1 wherein each axle includes balls or rollers that are radially offset relative to the balls or rollers in each adjacent axle.
Clause 8. The roller transfer plate of Clause 1 wherein the plurality of axles are positioned between a top surface and a bottom surface of the support plate.
Clause 9. The roller transfer plate of Clause 8 wherein the plurality of axles are positioned closer to the top surface of the support plate than the bottom surface.
Clause 10. The roller transfer plate of Clause 8 wherein the plurality of balls or rollers extend across only the top surface of the support plate and are inset from the bottom surface.
Clause 11. The roller transfer plate of Clause 1 wherein the plurality of axles each comprise a steel wire.
Clause 12. The roller transfer plate of Clause 1 wherein the center spindle drives a belt, the belt positioned generally perpendicular to the roller transfer plate.
Clause 13. A conveyor system for moving product comprising:
   an input conveyor;
   an output conveyor;
   a roller transfer plate positioned between the input conveyor and the output conveyor, the roller transfer plate including
      a support plate;
      a plurality of axles arranged radially in the plate; and
      a plurality of balls or rollers positioned on the plurality of axles, the plurality of balls or rollers arranged in concentric arcs.
Clause 14. The conveyor system of Clause 13 further comprising a center spindle positioned in the support plate wherein the center spindle drives a belt, the belt positioned generally perpendicular to the roller transfer plate.
Clause 15. The conveyor system of Clause 13 wherein each axle includes balls or rollers that are radially offset relative to the balls or rollers in each adjacent axle.
Clause 16. The conveyor system of Clause 13 wherein the plurality of axles are positioned between a top surface and a bottom surface of the support plate.
Clause 17. The conveyor system of Clause 16 wherein the plurality of axles are positioned closer to the top surface of the support plate than the bottom surface.
Clause 18. The conveyor system of Clause 16 wherein the plurality of balls or rollers extend across only the top surface of the support plate and are inset from the bottom surface.

## Claims

1. A roller transfer plate for moving product through a conveyor transition, the roller transfer plate comprising:
a support plate;
a center spindle;
a plurality of axles arranged radially in the plate relative to the center spindle;
a plurality of balls or rollers positioned on the plurality of axles, the plurality of balls or rollers arranged in concentric arcs relative to the center spindle.

2. The roller transfer plate of Claim 1 wherein the plurality of balls or rollers are positioned so that an outer diameter of each ball or roller is raised above the surface of the support plate.

3. The roller transfer plate of Claim 1 wherein locations of the ball or roller locations are arranged in an arc to cause conveyed product to follow the arc.

4. The roller transfer plate of Claim 1 wherein the support plate includes a plurality of cavities, each cavity of the plurality of cavities accommodating a ball or roller.

5. The roller transfer plate of Claim 1 further comprising an inlet conveyor connected to a first portion of the support plate and an outlet conveyor connected to a second portion of the support plate.

6. The roller transfer plate of Claim 5 wherein the first portion is positioned 180 degrees opposite the second portion.

7. The roller transfer plate of Claim 1 wherein each axle includes balls or rollers that are radially offset relative to the balls or rollers in each adjacent axle.

8. The roller transfer plate of Claim 1 wherein the plurality of axles are positioned between a top surface and a bottom surface of the support plate.

9. The roller transfer plate of Claim 8 wherein the plurality of axles are positioned closer to the top surface of the support plate than the bottom surface.

10. The roller transfer plate of Claim 8 wherein the plurality of balls or rollers extend across only the top surface of the support plate and are inset from the bottom surface.

11. The roller transfer plate of Claim 1 wherein the plurality of axles each comprise a steel wire or wherein the center spindle drives a belt, the belt positioned generally perpendicular to the roller transfer plate.

12. A conveyor system for moving product comprising:
an input conveyor;
an output conveyor;
a roller transfer plate positioned between the input conveyor and the output conveyor, the roller transfer plate including
a support plate;
a plurality of axles arranged radially in the plate; and
a plurality of balls or rollers positioned on the plurality of axles, the plurality of balls or rollers arranged in concentric arcs.

13. The conveyor system of Claim 12 further comprising a center spindle positioned in the support plate wherein the center spindle drives a belt, the belt positioned generally perpendicular to the roller transfer plate, or wherein each axle includes balls or rollers that are radially offset relative to the balls or rollers in each adjacent axle.

14. The conveyor system of Claim 12 wherein the plurality of axles are positioned between a top surface and a bottom surface of the support plate.

15. The conveyor system of Claim 14 wherein the plurality of axles are positioned closer to the top surface of the support plate than the bottom surface, or wherein the plurality of balls or rollers extend across only the top surface of the support plate and are inset from the bottom surface.
